# EUROPEAN PATENT APPLICATION

(11) **EP 2 787 754 A1**
(43) Date of publication of application: **08.10.2014**
(21) Application number: 12860017.8
(22) Date of filing: 19.12.2012
(51) Int. Cl.: H04W 12/08

(54) **SECURITY COMMUNICATION METHOD, DEVICE AND SYSTEM FOR LOW COST TERMINAL**

(30) Priority: 22.12.2011 CN 201110435615
(71) Applicant: Huawei Technologies Co., Ltd., Shenzhen, Guangdong 518129 (CN)
(72) Inventor: ZHANG, Lijia, Shenzhen Guangdong 518129 (CN); CHEN, Jing, Shenzhen Guangdong 518129 (CN)
(74) Representative: Maiwald Patentanwalts GmbH
(86) International application number: PCT/CN2012/086931
(87) International publication number: WO 2013/091543

(57) **Abstract**

Embodiments of the present invention provide a method, an apparatus and a system for secure communication of a low-cost terminal, which solves a communication security problem in the low-cost terminal and on a network side. The method includes: selecting, by an access point, a ciphering algorithm and an integrity algorithm according to a security capability of the low-cost terminal after successful authentication and key negotiation between the low cost terminal and a mobility control entity, and acquiring a cipher key and an integrity key according to the ciphering algorithm and the integrity algorithm; sending, by the access point, a security mode command including the ciphering algorithm and the integrity algorithm to the low-cost terminal so that the low-cost terminal calculates the cipher key and the integrity key; and receiving, by the access point, a security mode complete response message sent by the low-cost terminal. Embodiments of the present invention apply to radio communication.

## Description

This application claims priority to Chinese Patent Application No. 201110435615.3, filed with the Chinese Patent Office on December 22, 2012 and entitled "METHOD, APPARATUS AND SYSTEM FOR SECURE COMMUNICATION OF LOW-COST TERMINAL", which is incorporated herein by reference in its entirety.

### TECHNICAL FIELD

The present invention relates to the communications field, and in particular, to a method, an apparatus and a system for secure communication of a low-cost terminal.

### BACKGROUND

A machine to machine (machine to machine, M2M for short) technology integrates radio communications and information technologies and allows a direct communication between machines, requiring no manual intervention. A machine to machine (M2M) communication is also called a machine type communication (machine type communication, MTC for short) and is greatly different from a traditional human to human (human to human, H2H for short) communication system. Owing to characteristics such as a huge device quantity, low mobility, and small communication traffic, the M2M communication has many features of the machine type communication. In current 3GPP (the 3rd generation partnership project, the 3rd Generation Partnership Project) standards, optimization of a network system has started for these features.

In an existing low-cost terminal network architecture, a low-cost terminal has only a simple NAS (Non Access Stratum, non access stratum) and can only execute a related non access stratum procedure. An AP (Access Point, access point) as an access point needs to parse and translate a simple NAS message sent by the low-cost terminal and then transmits the translated simple NAS message to an NAS layer of an MME (Mobility Management Entity, mobility management entity), that is, the AP replaces the low-cost terminal to send the NAS message and perform related operations.

In this process, the inventor finds that NAS security is established between the low-cost terminal and the MME according to an existing security mechanism and a potential security risk exists between the AP and the low-cost terminal because the AP does not have an NAS security context of the low-cost terminal and cannot translate NAS signaling.

### SUMMARY

Embodiments of the present invention provide a method, an apparatus and a system for secure communication of a low-cost terminal, which solves a problem where an AP cannot translate NAS signaling of the low-cost terminal and ensures secure communication between the low-cost terminal and a network.

To achieve the preceding objectives, the embodiments of the present invention adopt the following technical solutions:

According to one aspect, a method for secure communication of a low-cost terminal is provided, including:
selecting, by an access point, a ciphering algorithm and an integrity algorithm according to a security capability of the low-cost terminal after successful authentication and key negotiation between the low cost terminal and a mobility control entity, and acquiring a cipher key and an integrity key according to the ciphering algorithm and the integrity algorithm;
sending, by the access point, a security mode command including the ciphering algorithm and the integrity algorithm to the low-cost terminal so that the low-cost terminal calculates the cipher key and the integrity key; and
receiving, by the access point, a security mode complete response message sent by the low-cost terminal.

According to another aspect, an access point is provided, including:
an algorithm key acquiring module, configured for the access point to acquire an ciphering algorithm, a cipher key, an integrity algorithm, and an integrity key corresponding to a security capability of a low-cost terminal after authentication and key negotiation between the low-cost terminal and a mobility control entity;
a cipher sending module, configured for the access point to send a security mode command including the ciphering algorithm and the integrity algorithm to the low-cost terminal so that the low-cost terminal calculates the cipher key and the integrity key; and
a receiving module, configured for the access point to receive a security mode complete response message sent by the low-cost terminal.

A mobility control entity includes:
a fourth authentication connecting module, configured to perform authentication and key negotiation between the mobility control entity and a low-cost terminal.

A base station includes:
a fifth authentication connecting module, configured to establish an access stratum security connection between the base station and an access point.

A low-cost terminal includes:
a sixth authentication connecting module, configured to perform authentication and key negotiation between the mobility control entity and the low-cost terminal;
a receiving module, configured to receive a security mode command including the ciphering algorithm and the integrity algorithm sent by the access point;
a deciphering module, configured to calculate a cipher key and an integrity key after receiving the security mode command; and
a reporting module, configured to send a security mode complete response message to the access point.

According to still another aspect, a system for secure communication of a low-cost terminal is provided, including:
an access point, configured for the access point to: select a ciphering algorithm and an integrity algorithm according to a security capability of the low-cost terminal after authentication and key negotiation between the low-cost terminal and a mobility control entity, and acquire a cipher key and an integrity key according to the ciphering algorithm and the integrity algorithm; send a security mode command including the ciphering algorithm and the integrity algorithm to the low-cost terminal so that the low-cost terminal calculates the cipher key and the integrity key; and receive a security mode complete response message sent by the low-cost terminal;
the mobility control entity, configured to perform authentication and key negotiation between the mobility control entity and the low-cost terminal;
a base station, configured to establish an access stratum security connection between the base station and the access point; and
the low-cost terminal, configured to perform authentication and key negotiation between the mobility control entity and the low-cost terminal, receive the security mode command including the ciphering algorithm and the integrity algorithm sent by the access point, calculate the cipher key and the integrity key after receiving the security mode command, and send the security mode complete response message to the access point.

The method, the apparatus and the system for secure communication of the low-cost terminal according to the embodiments of the present invention, in an existing low-cost terminal network architecture, use the keys to establish security over a connection between the low-cost terminal and the access point, thereby implementing secure communication between the mobile low-cost terminal and the network.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a method for secure communication of a low-cost terminal according to an embodiment of the present invention;
FIG. 2 is a schematic flowchart of another method for secure communication of a low-cost terminal according to an embodiment of the present invention;
FIG. 3 is a schematic flowchart of still another method for secure communication of a low-cost terminal according to an embodiment of the present invention;
FIG. 4 is a schematic flowchart of still another method for secure communication of a low-cost terminal according to an embodiment of the present invention;
FIG. 5 is a schematic flowchart of still another method for secure communication of a low-cost terminal according to an embodiment of the present invention;
FIG. 6 is a schematic structural diagram of an access point according to an embodiment of the present invention;
FIG. 7 is a schematic structural diagram of another access point according to an embodiment of the present invention;
FIG. 8 is a schematic structural diagram of still another access point according to an embodiment of the present invention;
FIG. 9 is a schematic structural diagram of still another access point according to an embodiment of the present invention;
FIG. 10 is a schematic structural diagram of still another access point according to an embodiment of the present invention;
FIG. 11 is a schematic structural diagram of still another access point according to an embodiment of the present invention;
FIG. 12 is a schematic structural diagram of a mobility control entity according to an embodiment of the present invention;
FIG. 13 is a schematic structural diagram of another mobility control entity according to an embodiment of the present invention;
FIG. 14 is a schematic structural diagram of a base station according to an embodiment of the present invention;
FIG. 15 is a schematic structural diagram of another base station according to an embodiment of the present invention;
FIG. 16 is a schematic structural diagram of a low-cost terminal according to an embodiment of the present invention; and
FIG. 17 is a schematic structural diagram of a system for secure communication of a low-cost terminal according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

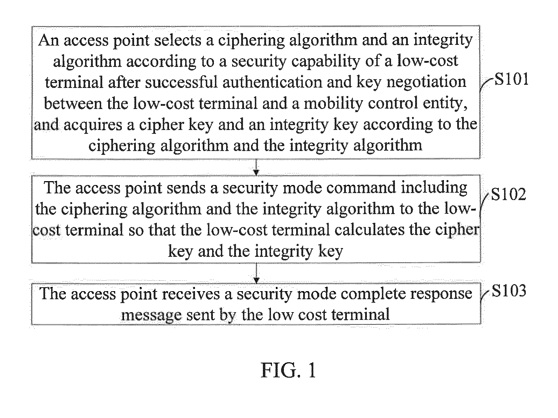

A method for secure communication of a low-cost terminal according to an embodiment of the present invention, as shown in FIG. 1, includes the following steps:
S101. An access point selects a ciphering algorithm and an integrity algorithm according to a security capability of the low-cost terminal after successful authentication and key negotiation between the low-cost terminal and a mobility control entity, and acquires a cipher key and an integrity key according to the ciphering algorithm and the integrity algorithm.
S102. The access point sends a security mode command including the ciphering algorithm and the integrity algorithm to the low-cost terminal so that the low-cost terminal calculates the cipher key and the integrity key.
S103. The access point receives a security mode complete response message sent by the low-cost terminal.

The method for secure communication of the low-cost terminal according to this embodiment of the present invention, in an existing low-cost terminal network architecture, uses the keys to establish security over a connection between the low-cost terminal and the access point, thereby implementing secure communication between the low-cost terminal and a network.

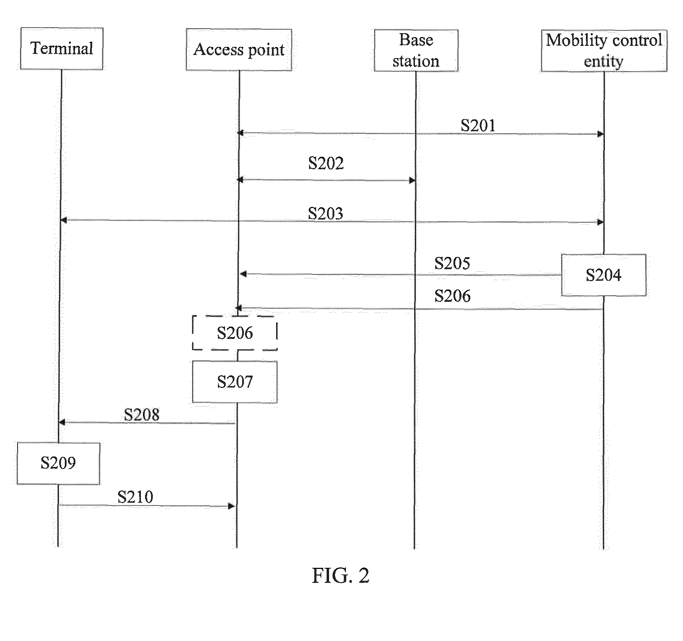

A method for secure communication of a low-cost terminal according to an embodiment of the present invention, as shown in FIG. 2, includes the following steps:
S201. An access point performs authentication and key negotiation with a mobility control entity, establishes a non access stratum security connection with the mobility control entity, and generates a non access stratum key.
S202. The access point establishes an access stratum security connection with a base station.
S203. The low-cost terminal performs authentication and key negotiation with the mobility control entity and generates a communication root key.

In this step, the communication root key Kₐₛₘₑ is generated.

S204. The mobility control entity calculates an access stratum root key according to the communication root key.

Here, the mobility control entity does not establish a non access stratum security connection with the low-cost terminal. The mobility control entity only needs to calculate the access stratum root key according to the communication root key Kₐₛₘₑ generated in S203. The access stratum root key is K_{eNB}=KDF(Kₐₛₘₑ, NAS Uplink Count).

S205. The mobility control entity sends the access stratum root key to the access point through the base station. Security protection is performed during this process by using the non access stratum key shared by the mobility control entity and the access point.

S206. The access point pre-configures a security capability of the low-cost terminal on the access point itself or acquires the security capability of the low-cost terminal from the mobility control entity.

Steps S205 and S206 are not in a chronological order and are merely in an example order for clear description herein. That is, step S206 may also be performed before S205 or simultaneously with S205. S206 in a dashed box shown in FIG. 2 indicates that the access point pre-configures the security capability of the low-cost terminal on the access point itself.

S207. The access point selects an access stratum ciphering algorithm, an access stratum integrity algorithm, a simple non access stratum ciphering algorithm, and a simple non access stratum integrity algorithm according to the security capability of the low-cost terminal, and calculates an access stratum key, an access stratum integrity key, a simple non access stratum key, and a simple non access stratum integrity key according to the access stratum root key as well as the selected access stratum ciphering algorithm, access stratum integrity algorithm, simple non access stratum ciphering algorithm and simple non access stratum integrity algorithm.

Key calculation manners are as follows: K_{RRCint}=KDF(K_{eNB}, RRC-int-alg, Alg-ID) for the access stratum integrity key, K_{RRCenc}=KDF(K_{eNB}, RRC-enc-alg, Alg-ID) for an access stratum signaling-plane cipher key, K_{UPenc}=KDF (K_{eNB}, UP-enc-alg, Alg-ID) for an access stratum user-plane cipher key, K_{SNASenc}=KDF(K_{eNB}, SNAS-enc-alg, Alg-ID) for the simple non access stratum cipher key, and K_{SNASint}=KDF(K_{eNB}, SNAS-int-alg, Alg-ID) for the simple non access stratum integrity key.

S208. The access point sends a security mode command including the access stratum ciphering algorithm, the access stratum integrity algorithm, the simple non access stratum ciphering algorithm, and the simple non access stratum integrity algorithm to the low-cost terminal.

Here, when the access stratum ciphering algorithm and the access stratum integrity algorithm are consistent with the simple non access stratum ciphering algorithm and the simple non access stratum integrity algorithm, the method in this step may include only one ciphering algorithm and one integrity algorithm.

S209. After receiving the security mode command, the low-cost terminal calculates the access stratum cipher key, the access stratum integrity key, the simple non access stratum cipher key and the simple non access stratum integrity key, and returns a security mode complete response message to the access point.

Here, manners for calculating the access stratum cipher key, the access stratum integrity key, the simple non access stratum cipher key, and the simple non access stratum integrity key are the same as those in step S207.

S210. The access point receives the security mode complete response message sent by the low-cost terminal.

The method for secure communication of the low-cost terminal according to this embodiment of the present invention, in an existing low-cost terminal network architecture, uses the keys to establish security over a connection between the low-cost terminal and the access point, thereby implementing secure communication between the low-cost terminal and a network.

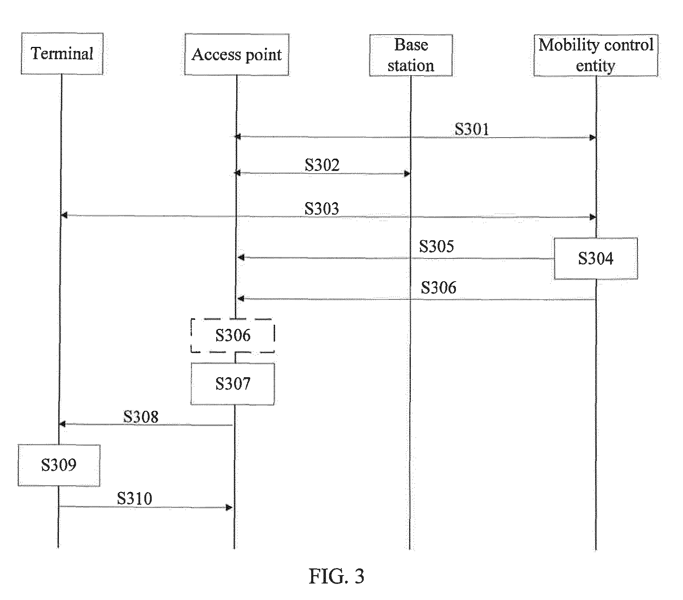

A method for secure communication of a low-cost terminal according to an embodiment of the present invention, as shown in FIG. 3, includes the following steps:
S301. An access point performs authentication and key negotiation with a mobility control entity, establishes a non access stratum security connection with the mobility control entity, and generates a non access stratum key.
S302. The access point establishes an access stratum security connection with a base station.
S303. The low-cost terminal performs authentication and key negotiation with the mobility control entity and generates a communication root key.

In this step, the communication root key Kₐₛₘₑ is generated.

S304. The mobility control entity calculates an access stratum root key according to the communication root key.

Here, the mobility control entity does not establish a non access stratum security connection with the low-cost terminal. The mobility control entity only needs to calculate the access stratum root key according to the communication root key Kₐₛₘₑ in S303. The access stratum root key is K_{eNB}=KDF(Kₐₛₘₑ, NAS Uplink Count).

S305. The mobility control entity sends the access stratum root key to the access point through the base station. Security protection is performed during this process by using the non access stratum key shared by the mobility control entity and the access point.

S306. The access point pre-configures a security capability of the low-cost terminal on the access point itself or acquires the security capability of the low-cost terminal from the mobility control entity.

Steps S305 and S306 are not in a chronological order and are merely in an example order for clear description herein. That is, step S306 may also be performed before S305 or simultaneously with S305. S306 in a dashed box shown in FIG. 3 indicates that the access point pre-configures the security capability of the low-cost terminal on the access point itself.

S307. The access point selects a ciphering algorithm and an integrity algorithm according to the security capability of the low-cost terminal, and calculates a signaling cipher key, a signaling integrity key, and a data cipher key according to the access stratum root key as well as the selected ciphering algorithm and integrity algorithm.

Key calculation manners are as follows: K_{SIGint}=KDF(K_{eNB}, Signalling-int-alg, Alg-ID) for the signaling cipher key, K_{SIGenc}=KDF(K_{eNB}, Signalling-enc-alg, Alg-ID) for the signaling integrity key, and K_{UPenc}=KDF (K_{eNB}, UP-enc-alg, Alg-ID) for the data cipher key..

S308. The access point sends a security mode command including the ciphering algorithm and the integrity algorithm to the low-cost terminal.

S309. After receiving the security mode command, the low-cost terminal calculates the signaling cipher key, the signaling integrity key and the data cipher key, and returns a security mode complete response message to the access point.

Key calculation manners used herein are the same as those in S307.

S310. The access point receives the security mode complete response message sent by the low-cost terminal.

The method for secure communication of the low-cost terminal according to this embodiment of the present invention, in an existing low-cost terminal network architecture, uses the keys to establish security over a connection between the low-cost terminal and the access point, thereby implementing secure communication between the low-cost terminal and a network.

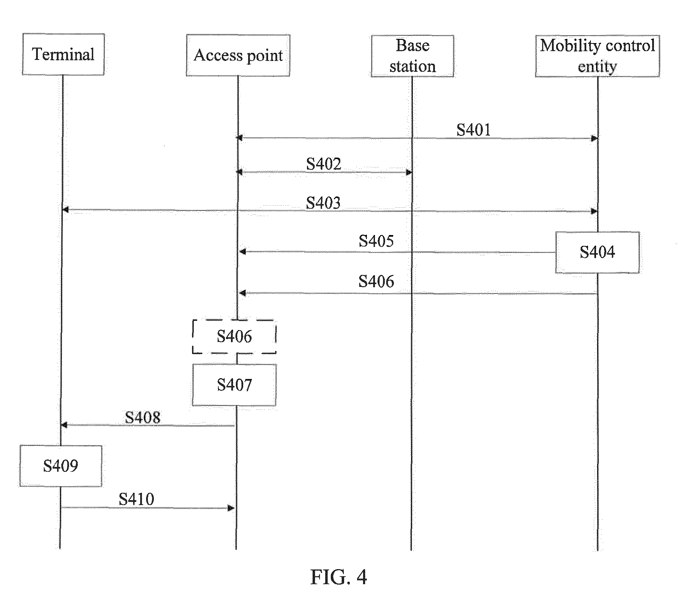

A method for secure communication according to an embodiment of the present invention, as shown in FIG. 4, includes the following steps:
S401. An access point performs authentication and key negotiation with a mobility control entity, establishes a non access stratum security connection with the mobility control entity, and generates a non access stratum key.
S402. The access point establishes an access stratum security connection with a base station.
S403. A low-cost terminal performs authentication and key negotiation with the mobility control entity and generates a communication root key, or generates a temporary communication root key according to the communication root key and non access stratum data after the communication root key is generated.

In this step, the communication root key Kₐₛₘₑ is generated, or the temporary communication root key Kₐₛₘₑ₋ₛ=(Kₐₛₘₑ, "Simple NAS") is generated according to the communication root key and the non access stratum data after the communication root key is generated, where the non access stratum data is a "Simple NAS" character string.

S404. The mobility control entity calculates an access stratum root key according to the communication root key.

Here, the mobility control entity does not establish a non access stratum security connection with the low-cost terminal. The mobility control entity only needs to calculate the access stratum root key K_{eNB}=KDF(Kₐₛₘₑ, NAS Uplink Count) according to the communication root key in S403.

S405. The mobility control entity sends the access stratum root key and the communication root key, or the access stratum root key and the temporary communication root key to the access point through the base station. Security protection is performed during this process by using the non access stratum key shared by the mobility control entity and the access point.

S406. The access point pre-configures a security capability of the low-cost terminal on the access point itself or acquires the security capability of the low-cost terminal from the mobility control entity.

Steps S405 and S406 are not in a chronological order and are merely in an example order for clear description herein. That is, step S406 may also be performed before S405 or simultaneously with S405. S406 in a dashed box shown in FIG. 4 indicates that the access point pre-configures the security capability of the low-cost terminal on the access point itself.

S407. The access point selects an access stratum ciphering algorithm, an access stratum integrity algorithm, a non access stratum ciphering algorithm, and a non access stratum integrity algorithm according to the security capability of the low-cost terminal, calculates an access stratum cipher key and an access stratum integrity key according to the access stratum ciphering algorithm, the access stratum integrity algorithm and the access stratum root key, and calculates a simple non access stratum cipher key and a simple non access stratum integrity key according to the simple non access stratum key algorithm, the simple non access stratum integrity algorithm and the communication root key or the temporary communication root key.

Key calculation manners are as follows: K_{RRCint}=KDF(K_{eNB}, RRC-int-alg, Alg-ID) for the access stratum integrity key, K_{RRCenc}=KDF(K_{eNB}, RRC-enc-alg, Alg-ID) for an access stratum signaling-plane cipher key, K_{UPenc}=KDF (K_{eNB}, UP-enc-alg, Alg-ID) for an access stratum user-plane cipher key, K_{SNASenc}=KDF(Kₐₛₘₑ/Kₐₛₘₑ₋ₛ, SNAS-enc-alg, Alg-ID) for the simple non access stratum cipher key, and K_{SNASint}=KDF(Kₐₛₘₑ/Kₐₛₘₑ₋ₛ, SNAS-int-alg, Alg-ID) for the simple non access stratum integrity key.

S408. The access point sends a security mode command including the access stratum ciphering algorithm, the access stratum integrity algorithm, the simple non access stratum ciphering algorithm, and the simple non access stratum integrity algorithm to the low-cost terminal.

Here, when the access stratum ciphering algorithm and the access stratum integrity algorithm are consistent with the simple non access stratum ciphering algorithm and the simple non access stratum integrity algorithm, the method in this step may include only one key algorithm and one integrity algorithm.

S409. After receiving the security mode command, the low-cost terminal calculates the access stratum cipher key, the access stratum integrity key, the simple non access stratum cipher key and the simple non access stratum integrity key, and returns a security mode complete response message to the access point.

Here, manners for calculating the access stratum cipher key, the access stratum integrity key, the simple non access stratum cipher key, and the simple non access stratum integrity key are the same as those in step S407.

S410. The access point receives the security mode complete response message sent by the low-cost terminal.

The method for secure communication of the low-cost terminal according to this embodiment of the present invention, in an existing low-cost terminal network architecture, uses the keys to establish security over a connection between the low-cost terminal and the access point, thereby implementing secure communication between the low-cost terminal and a network.

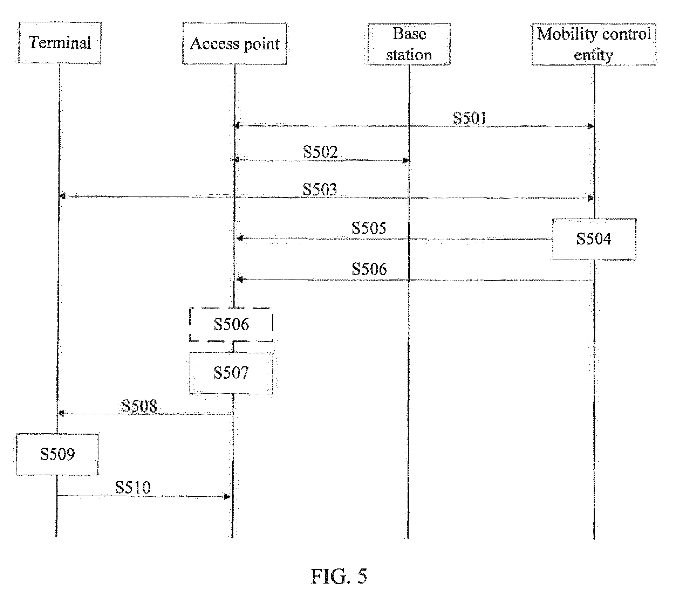

A method for secure communication of a low-cost terminal provided by an embodiment of the present invention, as shown in FIG. 5, includes the following steps:
S501. An access point performs authentication and key negotiation with a mobility control entity, establishes a non access stratum security connection with the mobility control entity, and generates a non access stratum key.
S502. The access point establishes an access stratum security connection with a base station.
S503. The low-cost terminal performs authentication and key negotiation with the mobility control entity and generates a communication root key.

In this step, the communication root key Kₐₛₘₑ is generated.

S504. The mobility control entity calculates an access stratum root key according to the communication root key, selects a simple non access stratum ciphering algorithm and a simple non access stratum integrity algorithm according to a security capability of the low-cost terminal and a security capability of the access point, and calculates a simple non access stratum cipher key and a simple non access stratum integrity key according to the simple non access stratum ciphering algorithm, the simple non access stratum integrity algorithm and the communication root key.

Here, the mobility control entity needs to calculate the access stratum root key according to the communication root key Kasme in step S503. The access stratum root key is K_{eNB}=KDF(Kₐₛₘₑ, Uplink NAS Count). Key calculation manners are as follows: K_{SNASenc}=KDF(Kₐₛₘₑ, SNAS-enc-alg, Alg-ID) for the simple non access stratum cipher key and K_{SNASint}=KDF(Kₐₛₘₑ, SNAS-int-alg, Alg-ID) for the simple non access stratum integrity key.

S505. The mobility control entity sends the access stratum root key, the simple non access stratum ciphering algorithm, the simple non access stratum integrity algorithm, and the calculated simple non access stratum cipher key and simple non access integrity key to the access point through the base station. Security protection is performed during this process by using the non access stratum key shared by the mobility control entity and the access point.

S506. The access point pre-configures the security capability of the low-cost terminal on the access point itself or acquires the security capability of the low-cost terminal from the mobility control entity.

Steps S505 and S506 are not in a chronological order and are merely in an example order for clear description herein. That is, step S506 may be performed before S505 or simultaneously with S505. S506 in a dashed box shown in FIG. 5 indicates that the access point pre-configures the security capability of the low-cost terminal on the access point itself.

S507. The access point selects an access stratum ciphering algorithm and an access stratum integrity algorithm according to the security capability of the low-cost terminal, and calculates an access stratum cipher key and an access stratum integrity key according to the access stratum root key as well as the selected access stratum ciphering algorithm and access stratum integrity algorithm.

Key calculation manners are as follows: K_{RRCint}=KDF(K_{eNB}, RRC-int-alg, Alg-ID) for the access stratum integrity key, K_{RRCenc}=KDF(K_{eNB}, RRC-enc-alg, Alg-ID) for the access stratum cipher key and K_{UPenc}=KDF (K_{eNB}, UP-enc-alg, Alg-ID) for the access stratum cipher key.

S508. The access point sends a security mode command including the access stratum ciphering algorithm, the access stratum integrity algorithm, the simple non access stratum ciphering algorithm, and the simple non access stratum integrity algorithm to the low-cost terminal.

Here, when the access stratum ciphering algorithm and the access stratum integrity algorithm are consistent with the simple non access stratum ciphering algorithm and the simple non access stratum integrity algorithm, the method in this step may include only one key algorithm and one integrity algorithm.

S509. After receiving the security mode command, the low-cost terminal calculates the access stratum cipher key, the access stratum integrity key, the simple non access stratum cipher key and the simple non access stratum integrity key, and returns a security mode complete response message to the access point.

Here, manners for calculating the access stratum cipher key and the access stratum integrity key are the same as those in step S507, and manners for calculating the simple non access stratum cipher key and the simple non access stratum integrity key are the same as those in step S504.

S510. The access point receives the security mode complete response message sent by the low-cost terminal.

The method for secure communication of the low-cost terminal according to this embodiment of the present invention, in an existing low-cost terminal network architecture, uses the keys to establish security over a connection between the low-cost terminal and the access point, thereby implementing secure communication between the low-cost terminal and a network.

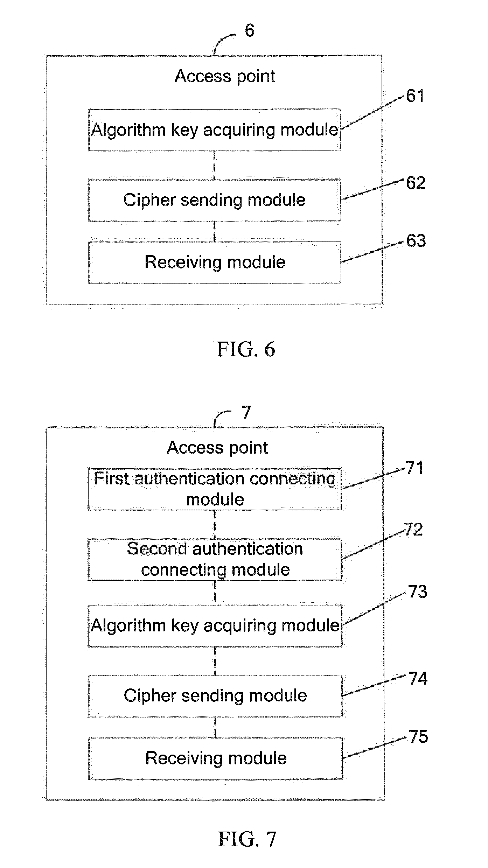

An access point 6 provided by an embodiment of the present invention, as shown in FIG. 6, includes an algorithm key acquiring module 61, a cipher sending module 62, and a receiving module 63.

The algorithm key acquiring module 61 is configured for the access point to select a ciphering algorithm and an integrity algorithm according to a security capability of a low-cost terminal after successful authentication and key negotiation between the low-cost terminal and a mobility control entity, and acquire a cipher key and an integrity key according to the ciphering algorithm and the integrity algorithm.

The cipher sending module 62 is configured for the access point to send a security mode command including the ciphering algorithm and the integrity algorithm to the low-cost terminal so that the low-cost terminal calculates the cipher key and the integrity key.

The receiving module 63 is configured for the access point to receive a security mode complete response message sent by the low-cost terminal.

Further, as shown in FIG. 7, an access point includes a first authentication connecting module 71, a second authentication connecting module 72, an algorithm key acquiring module 73, a cipher sending module 74, and a receiving module 75.

The first authentication connecting module 71 is configured for the access point to perform authentication and key negotiation with a mobility control entity, establish a non access stratum security connection with the mobility control entity, and generate a non access stratum key.

The second authentication connecting module 72 is configured for the access point to establish an access stratum security connection with a base station.

The algorithm key acquiring module 73 is configured for the access point to select a ciphering algorithm and an integrity algorithm according to a security capability of a low-cost terminal after successful authentication and key negotiation between the low-cost terminal and the mobility control entity, and acquire a cipher key and an integrity key according to the ciphering algorithm and the integrity algorithm.

The cipher sending module 74 is configured for the access point to send a security mode command including the ciphering algorithm and the integrity algorithm to the low-cost terminal so that the low-cost terminal calculates the cipher key and the integrity key.

The receiving module 75 is configured for the access point to receive a security mode complete response message sent by the low-cost terminal.

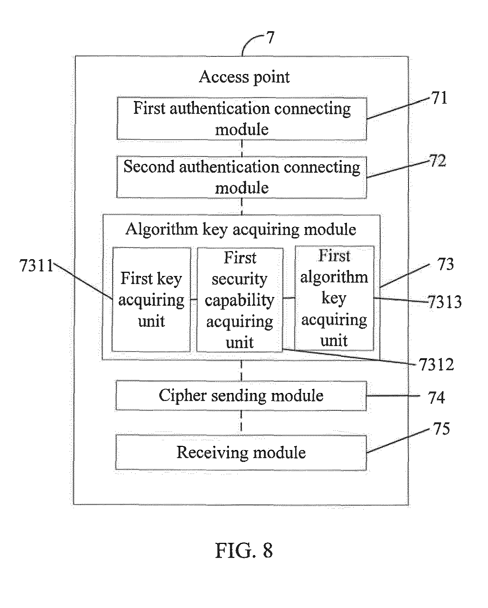

Further, as shown in FIG. 8, the algorithm key acquiring module 73 further includes:
a first key acquiring unit 7311, configured for the access point to receive an access stratum root key, which is sent by the mobility control entity and forwarded by the base station and for which security protection is performed by using the non access stratum key shared by the mobility control entity and the access point, where the access stratum root key is calculated by the mobility control entity according to a communication root key;
a first security capability acquiring unit 7312, configured for the access point to pre-configure the security capability of the low-cost terminal on the access point itself, or acquire, from the mobility control entity, the security capability of the low-cost terminal forwarded by the base station; and
a first algorithm key acquiring unit 7313, configured for the access point to select an access stratum ciphering algorithm, an access stratum integrity algorithm, a simple non access stratum ciphering algorithm, and a simple non access stratum integrity algorithm according to the security capability of the low-cost terminal, calculate an access stratum cipher key and an access stratum integrity key according to the access stratum ciphering algorithm, the access stratum integrity algorithm and the access stratum root key, and calculate a simple non access stratum cipher key and a simple non access stratum integrity key according to the simple non access stratum key algorithm, the simple non access stratum integrity algorithm and the access stratum root key.

The cipher sending module 74 is configured for the access point to send the security mode command including the access stratum ciphering algorithm, the access stratum integrity algorithm, the simple non access stratum ciphering algorithm, and the simple non access stratum integrity algorithm to the low-cost terminal, so that the low-cost terminal calculates the access stratum cipher key and the access stratum integrity key according to the access stratum ciphering algorithm and the access stratum integrity algorithm and calculates the simple non access stratum cipher key and the simple non access stratum integrity key according to the simple non access stratum ciphering algorithm and the simple non access stratum integrity algorithm.

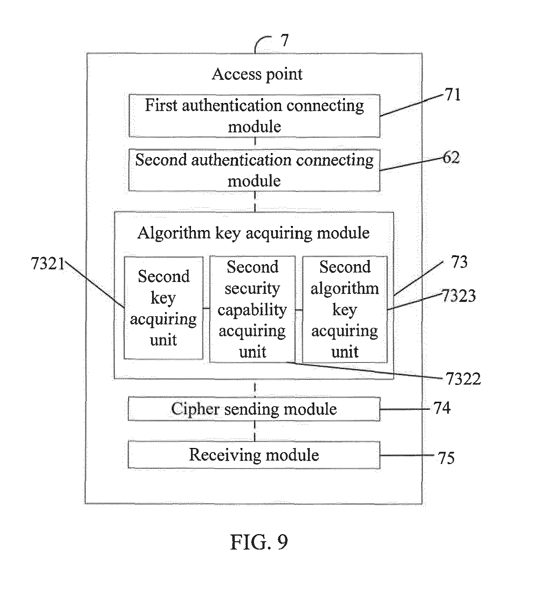

As shown in FIG. 9, the algorithm key acquiring module 73 further includes:
a second key acquiring unit 7321, configured for the access point to receive an access stratum root key, which is sent by the mobility control entity and forwarded by the base station and for which security protection is performed by using the non access stratum key shared by the mobility control entity and the access point, where the access stratum root key is calculated by the mobility control entity according to a communication root key;
a second security capability acquiring unit 7322, configured for the access point to pre-configure the security capability of the low-cost terminal on the access point itself, or acquire, from the mobility control entity, the security capability of the low-cost terminal forwarded by the base station; and
a second algorithm key acquiring unit 7323, configured for the access point to select the ciphering algorithm and the integrity algorithm according to the security capability of the low-cost terminal and calculate a signaling cipher key, a signaling integrity key and a data cipher key according to the ciphering algorithm, the integrity algorithm, and the access stratum root key.

The cipher sending module 74 is configured for the access point to send the security mode command including the ciphering algorithm and the integrity algorithm to the low-cost terminal, so that the low-cost terminal calculates the signaling cipher key, the signaling integrity key, and the data cipher key according to the ciphering algorithm and the integrity algorithm.

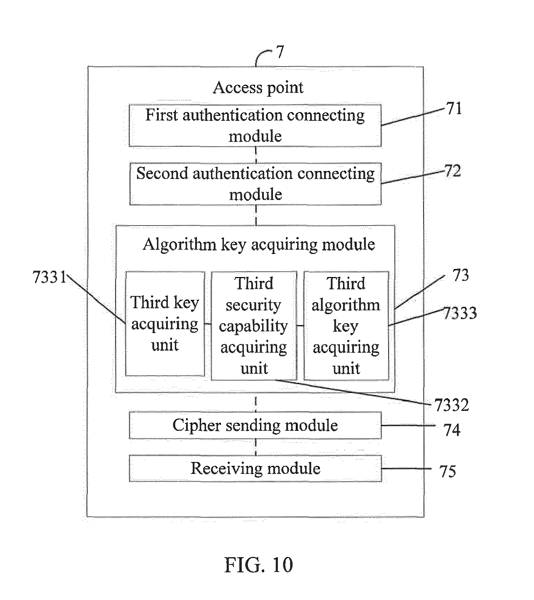

As shown in FIG. 10, the algorithm key acquiring module 73 further includes:
a third key acquiring unit 7331, configured for the access point to receive an access stratum root key and a communication root key, or the access stratum root key and a temporary communication root key, which are sent by the mobility control entity and forwarded by the base station and for which security protection is performed by using the non access stratum key shared by the mobility control entity and the access point, where the access stratum root key is calculated by the mobility control entity according to the communication root key;
a third security capability acquiring unit 7332, configured for the access point to pre-configure the security capability of the low-cost terminal on the access point itself, or acquire, from the mobility control entity, the security capability of the low-cost terminal forwarded by the base station; and
a third algorithm key acquiring unit 7333, configured for the access point to select an access stratum ciphering algorithm, an access stratum integrity algorithm, a simple non access stratum ciphering algorithm, and a simple non access stratum integrity algorithm according to the security capability of the low-cost terminal, calculate an access stratum cipher key and an access stratum integrity key according to the access stratum ciphering algorithm, the access stratum integrity algorithm and the access stratum root key, and calculate a simple non access stratum cipher key and a simple non access stratum integrity key according to the simple non access stratum key algorithm, the simple non access stratum integrity algorithm, and the access stratum root key or the temporary communication root key.

The cipher sending module 74 is configured for the access point to send the security mode command including the access stratum ciphering algorithm, the access stratum integrity algorithm, the simple non access stratum ciphering algorithm, and the simple non access stratum integrity algorithm to the low-cost terminal, so that the low-cost terminal calculates the access stratum cipher key and the access stratum integrity key according to the access stratum ciphering algorithm and the access stratum integrity algorithm and calculates the simple non access stratum cipher key and the simple non access stratum integrity key according to the simple non access stratum ciphering algorithm and the simple non access stratum integrity algorithm.

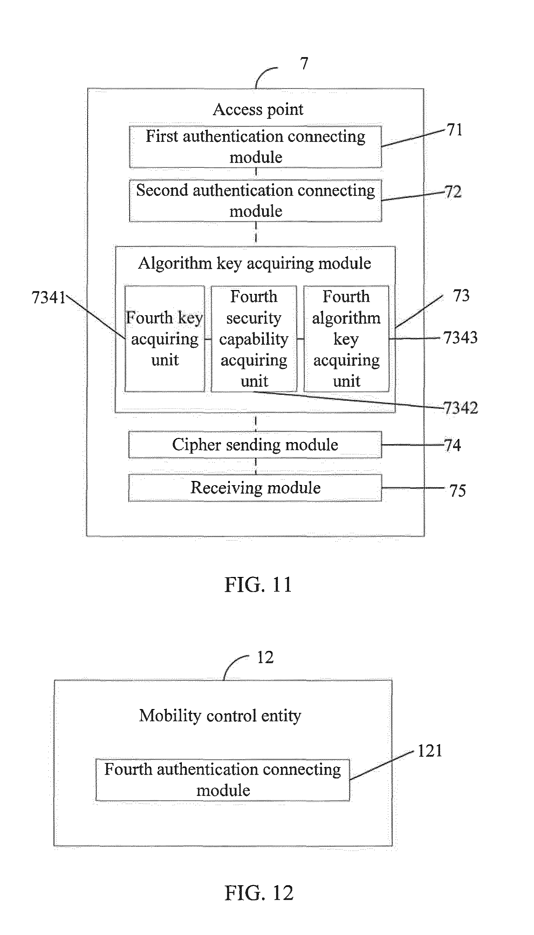

As shown in FIG. 11, the algorithm key acquiring module 73 further includes:
a fourth algorithm key acquiring unit 7341, configured for the access point to receive an access stratum root key, which is sent by the mobility control entity and forwarded by the base station and for which security protection is performed by using the non access stratum key shared by the mobility control entity and the access point, where the access stratum root key is calculated by the mobility control entity according to a communication root key; and receive a simple non access stratum ciphering algorithm and a simple non access stratum integrity algorithm that are selected by the mobility control entity according to the security capability of the low-cost terminal and a security capability of the access point as well as a simple non access stratum cipher key and a simple non access stratum integrity key that are calculated by the mobility control entity according to the simple non access stratum ciphering algorithm and the simple non access stratum integrity algorithm, which are sent by the mobility control entity and forwarded by the base station and for which security protection is performed by using the non access stratum key shared by the mobility control entity and the access point;
a fourth capability acquiring unit 7342, configured for the access point to pre-configure the security capability of the low-cost terminal on the access point itself, or acquire, from the mobility control entity, the security capability of the low-cost terminal forwarded by the base station; and
a fifth algorithm key acquiring unit 7343, configured for the access point to select an access stratum ciphering algorithm and an access stratum integrity algorithm according to the security capability of the low-cost terminal, calculate an access stratum cipher key according to the access stratum ciphering algorithm and the access stratum root key, and calculate an access integrity key according to the access stratum integrity algorithm and the access stratum root key.

The cipher sending module 74 is configured for the access point to send the security mode command including the access stratum ciphering algorithm, the access stratum integrity algorithm, the simple non access stratum ciphering algorithm, and the simple non access stratum integrity algorithm to the low-cost terminal, so that the low-cost terminal calculates the access stratum cipher key and the access stratum integrity key according to the access stratum ciphering algorithm and the access stratum integrity algorithm and calculates the simple non access stratum cipher key and the simple non access stratum integrity key according to the simple non access stratum ciphering algorithm and the simple non access stratum integrity algorithm.

A mobility control entity 12 provided by an embodiment of the present invention, as shown in FIG. 12, includes a fourth authentication connecting module 121.

The fourth authentication connecting module is configured to perform authentication and key negotiation between the mobility control entity and a low-cost terminal.

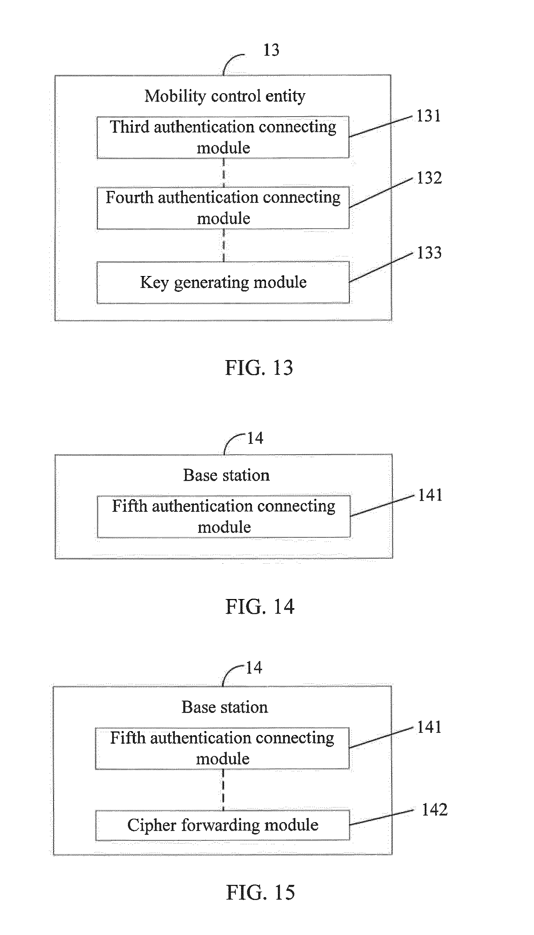

Further, as shown in FIG. 13, a mobility control entity 13 includes a third authentication connecting module 131, a fourth authentication connecting module 132, and a key generating module 133.

The third authentication connecting module 131 is configured for the mobility control entity to perform authentication and key negotiation with the access point, establish a non access stratum security connection with the access point, and generate a non access stratum key.

The fourth authentication connecting module 132 is configured to perform authentication and key negotiation between the mobility control entity and a low-cost terminal.

The key generating module 133 is configured to generate a communication root key and calculate an access stratum root key according to the communication root key; the key generating module 133 is further configured to calculate a temporary communication root key according to the communication root key and non access stratum data; the key generating module 133 is further configured to calculate the access stratum root key according to the communication root key, select a simple non access stratum ciphering algorithm and a simple non access stratum integrity algorithm according to a security capability of the low-cost terminal and a security capability of the access point, and calculate a simple non access stratum cipher key and a simple non access stratum integrity key according to the simple non access stratum ciphering algorithm, the simple non access stratum integrity algorithm, and the communication root key.

A base station 14 provided by an embodiment of the present invention, as shown in FIG. 14, includes:
a fifth authentication connecting module 141, configured to establish an access stratum security connection between the base station and an access point.

Further, as shown in FIG. 15, the base station 14 further includes:
a cipher forwarding module 142, configured to: receive an access stratum root key, for which security protection is performed by using a non access stratum key shared by a mobility control entity and the access point, and forward it to the access point; receive the access stratum root key and a communication root key, or the access stratum root key and a temporary communication root key, for which security protection is performed by using the non access stratum key shared by the mobility control entity and the access point, and forward them to the access point; and receive the access stratum root key, a simple non access stratum ciphering algorithm and a simple non access stratum integrity algorithm that are selected by the mobility control entity according to a security capability of a low-cost terminal and a security capability of the access point, as well as a simple non access stratum cipher key and a simple non access stratum integrity key that are calculated according to the simple non access stratum ciphering algorithm, the simple non access stratum integrity algorithm and the communication root key, for which security protection is performed by using the non access stratum key shared by the mobility control entity and the access point, and forward them to the access point.

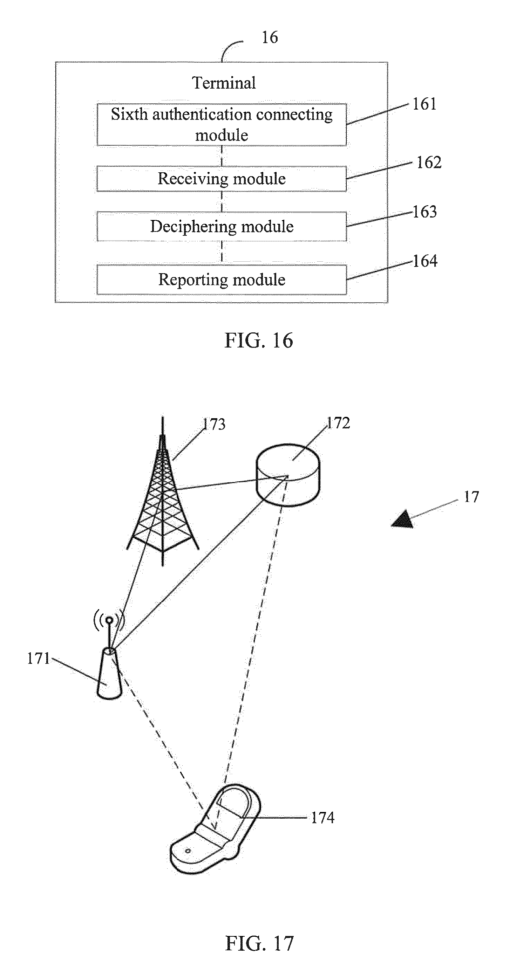

A low-cost terminal 16 provided by an embodiment of the present invention, as shown in FIG. 16, includes:
a sixth authentication connecting module 161, configured to perform authentication and key negotiation between a mobility control entity and the low-cost terminal;
a receiving module 162, configured to receive a security mode command including a ciphering algorithm and an integrity algorithm sent by an access point;
a deciphering module 163, configured to calculate a cipher key and an integrity key after receiving the security mode command; and
a reporting module 164, configured to send a security mode complete response message to the access point.

The apparatus for secure communication of the low-cost terminal according to this embodiment of the present invention, in an existing low-cost terminal network architecture, uses the keys to establish security over a connection between the low-cost terminal and the access point, thereby implementing secure communication between the low-cost terminal and a network.

A system for secure communication of a low-cost terminal according to an embodiment of the present invention, as shown in FIG. 17, includes:
an access point 171, configured for the access point to select a ciphering algorithm and an integrity algorithm according to a security capability of a low-cost terminal after successful authentication and key negotiation between the low-cost terminal and a mobility control entity, and acquire a cipher key and an integrity key according to the ciphering algorithm and the integrity algorithm; send a security mode command including the ciphering algorithm and the integrity algorithm to the low-cost terminal so that the low-cost terminal calculates the cipher key and the integrity key; and receive a security mode complete response message sent by the low-cost terminal;
a mobility control entity 172, configured to perform authentication and key negotiation between the mobility control entity and the low-cost terminal;
a base station 173, configured to establish an access stratum security connection between the base station and the access point; and
the low-cost terminal 174, configured to perform authentication and key negotiation between the mobility control entity and the low-cost terminal, receive the security mode command including the ciphering algorithm and the integrity algorithm sent by the access point, calculate the cipher key and the integrity key after receiving the security mode command, and send the security mode complete response message to the access point.

The system for secure communication of the low-cost terminal according to this embodiment of the present invention, in an existing low-cost terminal network architecture, uses the keys to establish security over a connection between the low-cost terminal and the access point, thereby implementing secure communication between the low-cost terminal and a network.

A person of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disc, or an optical disc.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for secure communication of a low-cost terminal, comprising:
selecting, by an access point, a ciphering algorithm and an integrity algorithm according to a security capability of the low-cost terminal after successful authentication and key negotiation between the low cost terminal and a mobility control entity, and acquiring a cipher key and an integrity key according to the ciphering algorithm and the integrity algorithm;
sending, by the access point, a security mode command comprising the ciphering algorithm and the integrity algorithm to the low-cost terminal so that the low-cost terminal calculates the cipher key and the integrity key; and
receiving, by the access point, a security mode complete response message sent by the low-cost terminal.

2. The method according to claim 1, wherein before the successful authentication and key negotiation between the low-cost terminal and the mobility control entity, the method further comprises:
performing, by the access point, authentication and key negotiation with the mobility control entity, establishing a non access stratum security connection with the mobility control entity, and generating a non access stratum key; and
establishing, by the access point, an access stratum security connection with a base station.

3. The method according to claim 2, wherein the authentication and key negotiation between the low-cost terminal and the mobility control entity comprises: performing authentication and key negotiation between the low-cost terminal and the mobility control entity and generating a communication root key; and
the selecting, by an access point, a ciphering algorithm and an integrity algorithm according to a security capability of the low-cost terminal, and acquiring a cipher key and an integrity key according to the ciphering algorithm and the integrity algorithm comprise:
receiving, by the access point, an access stratum root key, which is sent by the mobility control entity and forwarded by the base station and for which security protection is performed by using the non access stratum key shared by the mobility control entity and the access point, wherein the access stratum root key is calculated by the mobility control entity according to the communication root key;
pre-configuring, by the access point, the security capability of the low-cost terminal on the access point itself, or acquiring, from the mobility control entity, the security capability of the low-cost terminal forwarded by the base station; and
selecting, by the access point, an access stratum ciphering algorithm, an access stratum integrity algorithm, a simple non access stratum ciphering algorithm, and a simple non access stratum integrity algorithm according to the security capability of the low-cost terminal, calculating an access stratum cipher key and an access stratum integrity key according to the access stratum ciphering algorithm, the access stratum integrity algorithm, and the access stratum root key, and calculating a simple non access stratum cipher key and a simple non access stratum integrity key according to the simple non access stratum ciphering algorithm, the simple non access stratum integrity algorithm, and the access stratum root key.

4. The method according to claim 3, wherein the sending, by the access point, a security mode command comprising the ciphering algorithm and the integrity algorithm to the low-cost terminal so that the low-cost terminal calculates the cipher key and the integrity key comprises:
sending, by the access point, a security mode command comprising the access stratum ciphering algorithm, the access stratum integrity algorithm, the simple non access stratum ciphering algorithm, and the simple non access stratum integrity algorithm to the low-cost terminal, so that the low-cost terminal calculates the access stratum cipher key and the access stratum integrity key according to the access stratum ciphering algorithm and the access stratum integrity algorithm and calculates the simple non access stratum cipher key and the simple non access stratum integrity key according to the simple non access stratum ciphering algorithm and the simple non access stratum integrity algorithm.

5. The method according to claim 2, wherein the authentication and key negotiation between the low-cost terminal and the mobility control entity comprises: performing authentication and key negotiation between the low-cost terminal and the mobility control entity and generating a communication root key; and
the selecting, by an access point, a ciphering algorithm and an integrity algorithm according to a security capability of the low-cost terminal, and, acquiring a cipher key and an integrity key according to the ciphering algorithm and the integrity algorithm comprise:
receiving, by the access point, an access stratum root key, which is sent by the mobility control entity and forwarded by the base station and for which security protection is performed by using the non access stratum key shared by the mobility control entity and the access point, wherein the access stratum root key is calculated by the mobility control entity according to the communication root key;
pre-configuring, by the access point, the security capability of the low-cost terminal on the access point itself, or acquiring, from the mobility control entity, the security capability of the low-cost terminal forwarded by the base station; and
selecting, by the access point, the ciphering algorithm and the integrity algorithm according to the security capability of the low-cost terminal, and calculating a signaling cipher key, a signaling integrity key, and a data cipher key according to the ciphering algorithm, the integrity algorithm, and the access stratum root key.

6. The method according to claim 5, wherein the sending, by the access point, a security mode command comprising the ciphering algorithm and the integrity algorithm to the low-cost terminal so that the low-cost terminal calculates the cipher key and the integrity key comprises:
sending, by the access point, the security mode command comprising the ciphering algorithm and the integrity algorithm to the low-cost terminal, so that the low-cost terminal calculates the signaling cipher key, the signaling integrity key, and the data cipher key according to the ciphering algorithm and the integrity algorithm.

7. The method according to claim 2, wherein the authentication and key negotiation between the low-cost terminal and the mobility control entity comprises: performing authentication and key negotiation between the low-cost terminal and the mobility control entity and generating a communication root key, or generating a temporary communication root key according to the communication root key and non access stratum data after the communication root key is generated; and
the selecting, by an access point, a ciphering algorithm and an integrity algorithm according to a security capability of the low-cost terminal, and, acquiring a cipher key and an integrity key according to the ciphering algorithm and the integrity algorithm comprise:
receiving, by the access point, an access stratum root key and the communication root key, or the access stratum root key and the temporary communication root key, which are sent by the mobility control entity and forwarded by the base station and for which security protection is performed by using the non access stratum key shared by the mobility control entity and the access point, wherein the access stratum root key is calculated by the mobility control entity according to the communication root key;
pre-configuring, by the access point, the security capability of the low-cost terminal on the access point itself, or acquiring, from the mobility control entity, the security capability of the low-cost terminal forwarded by the base station; and
selecting, by the access point, an access stratum ciphering algorithm, an access stratum integrity algorithm, a simple non access stratum ciphering algorithm, and a simple non access stratum integrity algorithm according to the security capability of the low-cost terminal, calculating an access stratum cipher key and an access stratum integrity key according to the access stratum ciphering algorithm, the access stratum integrity algorithm, and the access stratum root key, and calculating a simple non access stratum cipher key and a simple non access stratum integrity key according to the simple non access stratum ciphering algorithm, the simple non access stratum integrity algorithm, and the communication root key or the temporary communication root key.

8. The method according to claim 7, wherein the sending, by the access point, a security mode command comprising the ciphering algorithm and the integrity algorithm to the low-cost terminal so that the low-cost terminal calculates the cipher key and the integrity key comprises:
sending, by the access point, a security mode command comprising the access stratum ciphering algorithm, the access stratum integrity algorithm, the simple non access stratum ciphering algorithm, and the simple non access stratum integrity algorithm to the low-cost terminal, so that the low-cost terminal calculates the access stratum cipher key and the access stratum integrity key according to the access stratum ciphering algorithm and the access stratum integrity algorithm and calculates the simple non access stratum cipher key and the simple non access stratum integrity key according to the simple non access stratum ciphering algorithm and the simple non access stratum integrity algorithm.

9. The method according to claim 2, wherein the authentication and key negotiation between the low-cost terminal and the mobility control entity comprises: performing authentication and key negotiation between the low-cost terminal and the mobility control entity and generating a communication root key; and
the selecting, by an access point, a ciphering algorithm and an integrity algorithm according to a security capability of the low-cost terminal, and, acquiring a cipher key and an integrity key according to the ciphering algorithm and the integrity algorithm comprise:
receiving, by the access point, an access stratum root key, which is sent by the mobility control entity and forwarded by the base station and for which security protection is performed by using the non access stratum key shared by the mobility control entity and the access point, wherein the access stratum root key is calculated by the mobility control entity according to the communication root key;
receiving, by the access point, a simple non access stratum ciphering algorithm and a simple non access stratum integrity algorithm that are selected by the mobility control entity according to the security capability of the low-cost terminal and a security capability of the access point as well as a simple non access stratum cipher key and a simple non access stratum integrity key that are calculated by the mobility control entity according to the simple non access stratum ciphering algorithm, the simple non access stratum integrity algorithm, and the communication root key, which are sent by the mobility control entity and forwarded by the base station and for which security protection is performed by using the non access stratum key shared by the mobility control entity and the access point;
pre-configuring, by the access point, the security capability of the low-cost terminal on the access point itself, or acquiring, from the mobility control entity, the security capability of the low-cost terminal forwarded by the base station; and
selecting, by the access point, an access stratum ciphering algorithm and an access stratum integrity algorithm according to the security capability of the low-cost terminal, and calculating an access stratum cipher key and an access stratum integrity key according to the access stratum ciphering algorithm, the access stratum integrity algorithm, and the access stratum root key.

10. The method according to claim 9, wherein the sending, by the access point, a security mode command comprising the ciphering algorithm and the integrity algorithm to the low-cost terminal so that the low-cost terminal calculates the cipher key and the integrity key comprises:
sending, by the access point, a security mode command comprising the access stratum ciphering algorithm, the access stratum integrity algorithm, the simple non access stratum ciphering algorithm, and the simple non access stratum integrity algorithm to the low-cost terminal, so that the low-cost terminal calculates the access stratum cipher key and the access stratum integrity key according to the access stratum ciphering algorithm and the access stratum integrity algorithm and calculates the simple non access stratum cipher key and the simple non access stratum integrity key according to the simple non access stratum ciphering algorithm and the simple non access stratum integrity algorithm.

11. An access point, comprising:
an algorithm key acquiring module, configured for the access point to select a ciphering algorithm and an integrity algorithm according to a security capability of a low-cost terminal after successful authentication and key negotiation between the low-cost terminal and a mobility control entity, and acquire a cipher key and an integrity key according to the ciphering algorithm and the integrity algorithm;
a cipher sending module, configured for the access point to send a security mode command comprising the ciphering algorithm and the integrity algorithm to the low-cost terminal so that the low-cost terminal calculates the cipher key and the integrity key; and
a receiving module, configured for the access point to receive a security mode complete response message sent by the low-cost terminal.

12. The access point according to claim 11, further comprising:
a first authentication connecting module, configured for the access point to perform authentication and key negotiation with the mobility control entity, establish a non access stratum security connection with the mobility control entity, and generate a non access stratum key; and
a second authentication connecting module, configured for the access point to establish an access stratum security connection with a base station.

13. The access point according to claim 12, wherein the algorithm key acquiring module further comprises:
a first key acquiring unit, configured for the access point to receive an access stratum root key, which is sent by the mobility control entity and forwarded by the base station and for which security protection is performed by using the non access stratum key shared by the mobility control entity and the access point, wherein the access stratum root key is calculated by the mobility control entity according to the communication root key;
a first security capability acquiring unit, configured for the access point to pre-configure the security capability of the low-cost terminal on the access point itself, or acquire, from the mobility control entity, the security capability of the low-cost terminal forwarded by the base station; and
a first algorithm key acquiring unit, configured for the access point to select an access stratum ciphering algorithm, an access stratum integrity algorithm, a simple non access stratum ciphering algorithm, and a simple non access stratum integrity algorithm according to the security capability of the low-cost terminal, calculate an access stratum cipher key and an access stratum integrity key according to the access stratum ciphering algorithm, the access stratum integrity algorithm, and the access stratum root key, and calculate a simple non access stratum cipher key and a simple non access stratum integrity key according to the simple non access stratum ciphering algorithm, the simple non access stratum integrity algorithm, and the access stratum root key.

14. The access point according to claim 13, wherein the cipher sending module is further configured for the access point to send a security mode command comprising the access stratum ciphering algorithm, the access stratum integrity algorithm, the simple non access stratum ciphering algorithm, and the simple non access stratum integrity algorithm to the low-cost terminal, so that the low-cost terminal calculates the access stratum cipher key and the access stratum integrity key according to the access stratum ciphering algorithm and the access stratum integrity algorithm and calculates the simple non access stratum cipher key and the simple non access stratum integrity key according to the simple non access stratum ciphering algorithm and the simple non access stratum integrity algorithm.

15. The access point according to claim 12, wherein the algorithm key acquiring module further comprises:
a second key acquiring unit, configured for the access point to receive an access stratum root key, which is sent by the mobility control entity and forwarded by the base station and for which security protection is performed by using the non access stratum key shared by the mobility control entity and the access point, wherein the access stratum root key is calculated by the mobility control entity according to the communication root key;
a second security capability acquiring unit, configured for the access point to pre-configure the security capability of the low-cost terminal on the access point itself, or acquire, from the mobility control entity, the security capability of the low-cost terminal forwarded by the base station; and
a second algorithm key acquiring unit, configured for the access point to select the ciphering algorithm and the integrity algorithm according to the security capability of the low-cost terminal, and calculate a signaling cipher key, a signaling integrity key, and a data cipher key according to the ciphering algorithm, the integrity algorithm, and the access stratum root key.

16. The access point according to claim 15, wherein the cipher sending module is further configured for the access point to send the security mode command comprising the ciphering algorithm and the integrity algorithm to the low-cost terminal, so that the low-cost terminal calculates the signaling cipher key, the signaling integrity key, and the data cipher key according to the ciphering algorithm and the integrity algorithm.

17. The access point according to claim 12, wherein the algorithm key acquiring module further comprises:
a third key acquiring unit, configured for the access point to receive an access stratum root key and a communication root key, or the access stratum root key and a temporary communication root key, which are sent by the mobility control entity and forwarded by the base station and for which security protection is performed by using the non access stratum key shared by the mobility control entity and the access point, wherein the access stratum root key is calculated by the mobility control entity according to the communication root key;
a third security capability acquiring unit, configured for the access point to pre-configure the security capability of the low-cost terminal on the access point itself, or acquire, from the mobility control entity, the security capability of the low-cost terminal forwarded by the base station; and
a third algorithm key acquiring unit, configured for the access point to select an access stratum ciphering algorithm, an access stratum integrity algorithm, a simple non access stratum ciphering algorithm, and a simple non access stratum integrity algorithm according to the security capability of the low-cost terminal, calculate an access stratum cipher key and an access stratum integrity key according to the access stratum ciphering algorithm, the access stratum integrity algorithm, and the access stratum root key, and calculate a simple non access stratum cipher key and a simple non access stratum integrity key according to the simple non access stratum ciphering algorithm, the simple non access stratum integrity algorithm, and the communication root key or the temporary communication root key.

18. The access point according to claim 17, wherein the cipher sending module is further configured for the access point to send a security mode command comprising the access stratum ciphering algorithm, the access stratum integrity algorithm, the simple non access stratum ciphering algorithm, and the simple non access stratum integrity algorithm to the low-cost terminal, so that the low-cost terminal calculates the access stratum cipher key and the access stratum integrity key according to the access stratum ciphering algorithm and the access stratum integrity algorithm and calculates the simple non access stratum cipher key and the simple non access stratum integrity key according to the simple non access stratum ciphering algorithm and the simple non access stratum integrity algorithm.

19. The access point according to claim 12, wherein the algorithm key acquiring module further comprises:
a fourth algorithm key acquiring unit, configured for the access point to: receive an access stratum root key, which is sent by the mobility control entity and forwarded by the base station and for which security protection is performed by using the non access stratum key of the access point, wherein the access stratum root key is calculated by the mobility control entity according to the communication root key; and receive a simple non access stratum ciphering algorithm and a simple non access stratum integrity algorithm that are selected by the mobility control entity according to the security capability of the low-cost terminal and a security capability of the access point as well as a simple non access stratum cipher key and a simple non access stratum integrity key that are calculated by the mobility control entity according to the simple non access stratum ciphering algorithm, the simple non access stratum integrity algorithm, and the communication root key, which are sent by the mobility control entity and forwarded by the base station and for which security protection is performed by using the non access stratum key shared by the mobility control entity and the access point;
a fourth security capability acquiring unit, configured for the access point to pre-configure the security capability of the low-cost terminal on the access point itself, or acquire, from the mobility control entity, the security capability of the low-cost terminal forwarded by the base station; and
a fifth algorithm key acquiring unit, configured for the access point to select an access stratum ciphering algorithm and an access stratum integrity algorithm according to the security capability of the low-cost terminal, and calculate an access stratum cipher key and an access stratum integrity key according to the access stratum ciphering algorithm, the access stratum integrity algorithm, and the access stratum root key.

20. The access point according to claim 19, wherein the cipher sending module is further configured for the access point to send a security mode command comprising the access stratum ciphering algorithm, the access stratum integrity algorithm, the simple non access stratum ciphering algorithm, and the simple non access stratum integrity algorithm to the low-cost terminal, so that the low-cost terminal calculates the access stratum cipher key and the access stratum integrity key according to the access stratum ciphering algorithm and the access stratum integrity algorithm and calculates the simple non access stratum cipher key and the simple non access stratum integrity key according to the simple non access stratum ciphering algorithm and the simple non access stratum integrity algorithm.

21. A mobility control entity, comprising:
a fourth authentication connecting module, configured to perform authentication and key negotiation between the mobility control entity and a low-cost terminal.

22. The mobility control entity according to claim 21, further comprising:
a third authentication connecting module, configured for the mobility control entity to perform authentication and key negotiation with the access point, establish a non access stratum security connection with the access point, and generate a non access stratum key.

23. The mobility control entity according to claim 22, further comprising:
a key generating module, configured to generate a communication root key and calculate an access stratum root key according to the communication root key.

24. The mobility control entity according to claim 23, wherein the key generating module is further configured to calculate a temporary communication root key according to the communication root key and non access stratum data.

25. The mobility control entity according to claim 23, wherein the key generating module is further configured to calculate the access stratum root key according to the communication root key, select a simple non access stratum ciphering algorithm and a simple non access stratum integrity algorithm according to a security capability of the low-cost terminal and a security capability of the access point, and calculate a simple non access stratum cipher key and a simple non access stratum integrity key according to the simple non access stratum ciphering algorithm, the simple non access stratum integrity algorithm, and the communication root key.

26. A base station, comprising:
a fifth authentication connecting module, configured to establish an access stratum security connection between the base station and an access point.

27. The base station according to claim 26, further comprising:
a cipher forwarding module, configured to receive the access stratum root key, for which security protection is performed by using the non access stratum key shared by the mobility control entity and the access point, and forward it to the access point.

28. The base station according to claim 26, wherein the cipher forwarding module is further configured to receive the access stratum root key and a communication root key, or the access stratum root key and a temporary communication root key, for which security protection is performed by using the non access stratum key shared by the mobility control entity and the access point, and forward them to the access point.

29. The base station according to claim 26, wherein the cipher forwarding module is further configured to receive the access stratum root key, a simple non access stratum ciphering algorithm and a simple non access stratum integrity algorithm that are selected by the mobility control entity according to a security capability of the low-cost terminal and a security capability of the access point, as well as a simple non access stratum cipher key and a simple non access stratum integrity key that are calculated according to the simple non access stratum ciphering algorithm, the simple non access stratum integrity algorithm, and the communication root key, for which security protection is performed by using the non access stratum key shared by the mobility control entity and the access point, and forward them to the access point.

30. A low-cost terminal, comprising:
a sixth authentication connecting module, configured to perform authentication and key negotiation between the mobility control entity and the low-cost terminal;
a receiving module, configured to receive a security mode command comprising the ciphering algorithm and the integrity algorithm sent by the access point;
a deciphering module, configured to calculate a cipher key and an integrity key after receiving the security mode command; and
a reporting module, configured to send a security mode complete response message to the access point.

31. A system for secure communication, comprising:
an access point, configured for the access point to: select a ciphering algorithm and an integrity algorithm according to a security capability of a low-cost terminal after successful authentication and key negotiation between the low-cost terminal and a mobility control entity, and acquire a cipher key and an integrity key according to the ciphering algorithm and the integrity algorithm; send a security mode command comprising the ciphering algorithm and the integrity algorithm to the low-cost terminal so that the low-cost terminal calculates the cipher key and the integrity key; and receive a security mode complete response message sent by the low-cost terminal;
the mobility control entity, configured to perform authentication and key negotiation between the mobility control entity and the low-cost terminal;
a base station, configured to establish an access stratum security connection between the base station and the access point; and
the low-cost terminal, configured to perform authentication and key negotiation between the mobility control entity and the low-cost terminal, receive the security mode command comprising the ciphering algorithm and the integrity algorithm sent by the access point, calculate the cipher key and the integrity key after receiving the security mode command, and send the security mode complete response message to the access point.
